# EUROPÄISCHE PATENTSCHRIFT

(11) **EP 0 408 909 B1**
(45) Veröffentlichungstag und Bekanntmachung des Hinweises auf die Patenterteilung: **18.01.1995**
(21) Anmeldenummer: 90111526.1
(22) Anmeldetag: 19.06.1990
(51) Int. Cl.: B60R 22/16

(54) **Sicherheitsgurtsystem, insbesondere für Kraftfahrzeuge**
Seatbelt system, in particular for motor vehicles
Ceinture de sécurité, en particulier pour véhicules automobiles

(30) Priorität: 21.07.1989 DE 3924149
(43) Veröffentlichungstag der Anmeldung: 23.01.1991
(73) Patentinhaber: Dr.Ing.h.c. F. Porsche Aktiengesellschaft, 70435 Stuttgart (DE)
(72) Erfinder: Kneip, Rainer, Dipl.-Ing., D-7147 Eberdingen/Hochdorf (DE)

(56) Entgegenhaltungen:
- EP-A- 0 034 458
- AU-B- 521 268
- DE-A- 2 221 427
- DE-A- 2 530 337
- GB-A- 2 016 263
- US-A- 3 444 957

## Beschreibung

Die Erfindung bezieht sich auf ein Sicherheitsgurtsystem für Kraftfahrzeuge mit einem Gurtband, an dem örtlich ein Energieabsorptionsglied vorgesehen ist, das durch einen wenigstens einfach zusammengefalteten und miteinander vernähten Gurtbandabschnitt gebildet wird, wobei sich das Energieabsorptionsglied innerhalb einer Gurtbandabdeckung erstreckt.

Derartige Energieabsorptionsglieder an Gurtbändern dienen dazu, daß bei einem Unfall gezielt Energie abgebaut wird, um schwere Verletzungen des Gurtbenutzers bzw. Sitzinsassen zu vermeiden. Ein Sicherheitsgurtsystem mit einem gattungsgemäßen Energieabsorptionsglied ist aus der DE-B-25 44 274 bekannt. Bei einem Unfall im Geschwindigkeitsbereich von ca. 50 km/h reißt die Naht zwischen den vernähten, schlaufenartig zusammengelegten Gurtbandabschnitten vollständig auf, wodurch wirkungsvoll Energie abgebaut wird. Bei Bagatellunfällen mit wesentlich geringeren Geschwindigkeiten wird die Naht zwischen den zusammengefalteten Gurtbandabschnitten hingegen nicht oder nur teilweise aufgerissen. Da die Energieabsorptionsglieder verdeckt innerhalb einer hüllenartigen Gurtbandabdeckung angeordnet sind, ist es für den Sitzinsassen bzw. die Fachwerkstatt nicht ersichtlich, ob das Energieabsorptionsglied bei einem Bagatellunfall beschädigt wurde oder nicht bzw. ob ein Austausch des das Energieabsorptionsglied enthaltenden Sicherheitsgurtsystems erforderlich ist.

Die US-A-34 44 957 zeigt ein Sicherheitsgurtsystem für Bauarbeiter, wobei ein Bauchgurt mit einer Halteleine verbunden ist und zwischen Halteleine und Bauchgurt ein Energieabsorptionsglied vorgesehen ist.

Das Energieabsorptionsglied wird durch einen zusammengefalteten, miteinander vernähten Gurtbandabschnitt gebildet, der sich innerhalb einer Gurtbandabdeckung erstreckt. Die Gurtbandabdeckung ist aus Stoff gefertigt und auf einer Seite mit dem austretenden Gurtband vernäht.

Bei einer entsprechenden Kraftbeaufschlagung reißt zuerst die Naht zwischen Gurtband und Gurtbandabdeckung und beim weiteren Entfalten des Energieabsorptionsgliedes wird die Gurtbandabdeckung vollständig zerstört. Bei dieser Anordnung ist keine Kennzeichnung am Gurtband vorgesehen, sonden dem Bauarbeiter wird durch Zerreißen der Gurbandabdeckung angezeigt, daß er den Gurt und zusätzlich die Gurtbandabdeckung ersetzen muß.

Die GB-A-20 16 263 offenbart eine Schloßzunge eines Sicherheitsgurtsystems, die ein Gurtband aufnimmt. Die Schloßzunge ist von einer Abdeckkappe aus Kunststoff umgeben. Bei entsprechender Kraftbeauschlagung auf das Gurtband wird die Abdeckkappe entlang von Sollbruchstellen aufgerissen und weist somit auf eine relativ hohe Gurtbeanspruchung hin.

Aufgabe der Erfindung ist es, an einem Sicherheitsgurtsystem mit einem integrierten Energieabsorptionsglied solche Vorkehrungen zu treffen, daß der Sitzinsasse bzw. die Fachwerkstatt bereits bei einem Bagatellunfall darüber informiert ist, ob das Gurtband ausgetauscht werden muß.

Erfindungsgemäß wird diese Aufgabe durch die kennzeichnenden Merkmale des Anspruchs 1 gelöst. Weitere, die Erfindung in vorteilhafter Weise ausgestaltende Merkmale enthaltet der Unteranspruch.

Die mit der Erfindung hauptsächlich erzielten Vorteile sind darin zu sehen, daß durch die Anordnung einer Kennzeichnung dem Gurtbenutzer bzw. der Fachwerkstatt deutlich gemacht wird, ob nach einem Bagatellunfall der Sicherheitsgurt mit dem integrierten Energieabsorptionsglied ausgewechselt werden muß oder nicht, wodurch stets eine einwandfreie Funktion des Sicherheitsgurtsystems gewährleistet ist. Durch die spezielle Lage der Kennzeichnung wird erreicht, daß bereits bei einer relativ geringen Verlängerung des Gurtbandes dem Gurtbenutzer bzw. der Fachwerkstatt angezeigt wird, daß der Gurt erneuert werden muß.

Die Kennzeichnung läßt sich einfach und kostengünstig herstellen und kann als Farbbalken, Schriftzug, Symbol oder dergleichen ausgebildet werden.

Ein Ausführungsbeispiel der Erfindung ist in der Zeichnung dargestellt und wird im folgenden näher erläutert.

Es zeigt
- Fig. 1: eine Schrägansicht von vorne auf einen Kraftfahrzeugsitz mit einem Sicherheitsgurtsystem,
- Fig. 2: eine Einzelheit X der Fig. 1 in größerem Maßstab mit intaktem Energieabsorptionsglied,
- Fig. 3: eine Einzelheit X der Fig. 1 in größerem Maßstab mit teilweise aufgerissener Naht des Energieabsorptionsgliedes,
- Fig. 4: einen Schnitt nach der Linie IV-IV der Fig. 2, vergrößert.

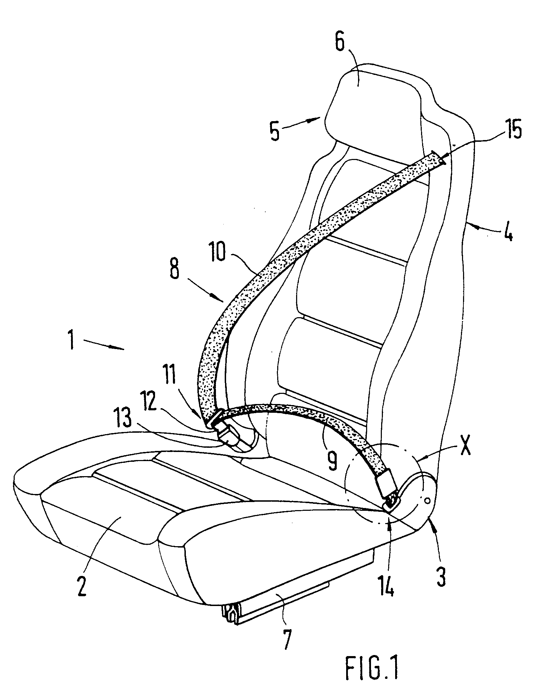

Der in Fig. 1 dargestellte Sitz 1 für ein Kraftfahrzeug, ein Flugzeug oder dergleichen umfaßt ein Sitzteil 2, das unter Vermittlung von beidseitig angeordneten Verstellbeschlägen 3 mit einer neigungsverstellbaren Rückenlehne 4 verbunden ist. Ein oberer Abschnitt 5 der Rückenlehne 4 ist als feststehende Kopfstütze 6 ausgebildet. Das Sitzteil 2 ist unter Vermittlung von sich in Fahrzeuglängsrichtung erstreckenden Führungsschienen 7 verschiebbar am angrenzenden, nicht näher dargestellten Fahrzeugboden gelagert.

Zur Sicherung eines auf dem Sitz 1 befindlichen Fahrzeuginsassen ist ein Sicherheitsgurtsystem 8 vorgesehen, das gemäß Fig. 1 als Dreipunkt-Sicherheitsgurt ausgeführt ist. Das Sicherheitsgurtsystem 8 umfaßt einen Beckengurt 9 und einen Schrägschultergurt 10, die einen gemeinsamen unteren Haltepunkt 11 besitzen. Dieser Haltepunkt 11 wird durch eine am Gurtband 16 verschiebbar gehaltene Schloßeinstecklasche 12 gebildet, die in ein Schloßaufnahmeteil 13 einrastbar ist. Der Beckengurt 9 verläuft vom Haltepunkt 11 zu einem zweiten, etwa auf der gleichen Höhe angeordneten Haltepunkt 14 auf der anderen Seite des Sitzes 1. Der Haltepunkt 14 ist als Gurtöse ausgebildet.

Der Schrägschultergurt 10 erstreckt sich vom unteren Haltepunkt 11 etwa diagonal zur Rückenlehne 4 zu einem oberen Haltepunkt 15, der im Bereich der Schulter des Fahrzeuginsassen, und zwar seitlich neben der Kopfstütze 6 an der Rückenlehne 4 angeordnet ist. Der obere Haltepunkt 15 kann als Umlenkbeschlag oder als Befestigungsbeschlag (Aufrollautomat) ausgebildet sein. Ferner ist der obere Haltepunkt 15 in nicht näher dargestellter Weise in Höhenrichtung verstellbar, so daß für Sitzinsassen mit unterschiedlicher Größe eine optimale Einstellung des oberen Haltepunktes 15 ermöglicht wird.

Außerdem ist das Fahrzeug in nicht gezeigter Weise fahrerseitig und beifahrerseitig mit einem Airbag versehen. Damit bei einem Sitzinsassen bei einem Unfall die Brustbelastung infolge des Luftsackes und des Schrägschultergurtes 10 nicht zu hoch wird, weist das Sicherheitsgurtsystem 8 örtlich ein Energieabsorptionsglied 17 auf. Gemäß Fig. 1 ist das Energieabsorptionsglied 17 oberhalb des Haltepunktes 14 angeordnet und wird durch einen wenigstens einfach zusammengefalteten und miteinander vernähten Gurtbandabschnitt 18 gebildet. Das Energieabsorptionsglied 17 wird auch als textiles Reißglied bezeichnet, das mit einer Naht 23 (Reißnaht) versehen ist. Die Naht 23ist so ausgelegt, daß erst ab einer definierten Verzögerung ein Aufreißen der Naht 23 erfolgt. Reißt die Naht 23 vollständig auf, so verlängert sich das Gurtband 16 um etwa 100 bis 200 mm.

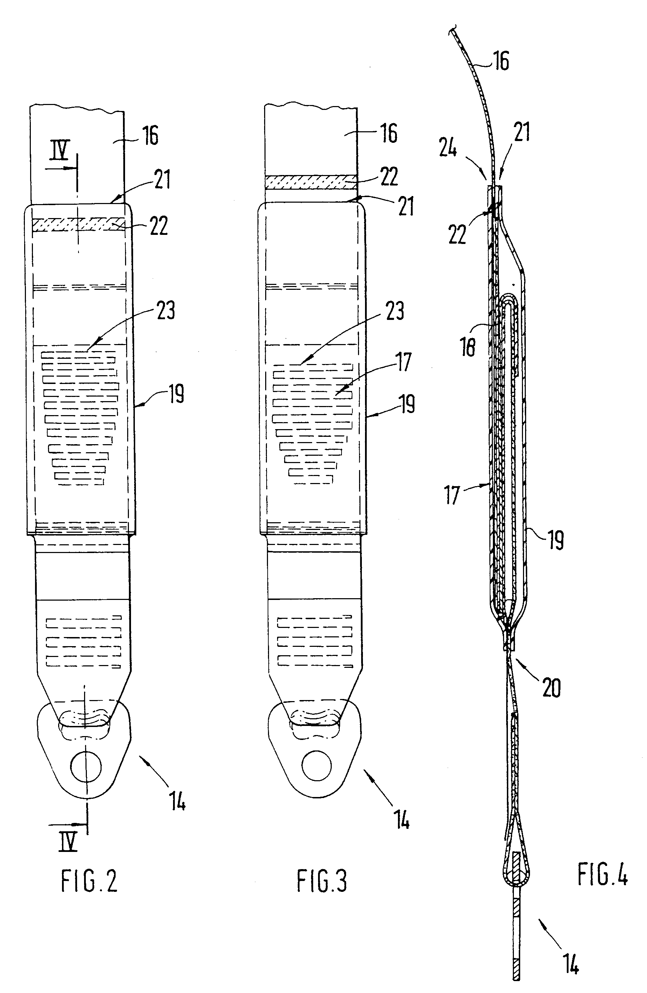

Entsprechend Fig. 4 ist das Energieabsorptionsglied 17 verdeckt innerhalb einer hüllenartigen Gurtbandabdeckung 19 angeordnet, wobei die Gurtbandabdeckung 19 aus einem geeigneten dünnwandigen Kunststoff gefertigt ist. Die Gurtbandabdeckung 19 weist an ihren beiden Endbereichen Öffnungen 20, 21 zum Hindurchführen des Gurtbandes 16 auf. Im Bereich des zusammengefalteten Energieabsorptionsgliedes 17 ist die Gurtbandabdeckung 19 mit einem größeren Querschnitt versehen als an ihren beiden Enden.

Erfindungsgemäß ist das Gurtband 16 benachbart dem Energieabsorptionsglied 17 mit einer Kennzeichnung 22 versehen, dergestalt, daß die Kennzeichnung 22 bei intaktem Energieabsorptionsglied 17 für den Sitzinsassen (Gurtbenutzer) unsichtbar ist, wogegen sie bei zumindest teilweise aufgerissener Naht 23 des Energieabsorptionsgliedes 17 für den Sitzinsassen sichtbar ist. Bei intaktem Energieabsorptionsglied 17 ist die Kennzeichnung 22 verdeckt innerhalb der hüllenartigen Gurtbandabdeckung 19 angeordnet. Gemäß Fig. 4 ist die Kennzeichnung 22 unterhalb des oberen Randbereiches 24 der Gurtbandabdeckung 19 vorgesehen, und zwar benachbart der Öffnung 21 für das Gurtband 16.

Reißt bei einem Bagatellunfall die Naht 23 zumindest teilweise auf (Fig. 3), verlängert sich das Gurtband 16 und die Kennzeichnung 22 gelangt außerhalb der Gurtbandabdeckung 19, so daß der Sitzinsasse bzw,. die Fachwerkstatt sofort darüber informiert ist, daß das Sicherheitsgurtsystem 8 ausgetauscht werden muß.

Die Kennzeichnung 22 kann entweder als schmaler, quer zum Gurtband 16 verlaufender Farbbalken, als Schriftzug, Symbol oder dergleichen ausgebildet sein. Wird ein Farbbalken gewählt, so unterscheidet sich dieser deutlich von der Farbe des Gurtbandes 16. Als Schriftzug könnte beispielsweise "Change Seat Belt" oder dergleichen verwendet werden. Die Kennzeichnung 22 kann beispielsweise aufgedruckt oder aufgenäht werden. Im Ausführungsbeispiel sind sämtliche Anlenkpunkte 11, 14, 15 des Sicherheitsgurtsystems 8 direkt am Sitz 1 angeordnet. Es besteht jedoch auch die Möglichkeit, die Anlenkpunkte 11, 14, 15 des Sicherheitsgurtsystems 8 aufbauseitig am Tunnel, an der Seitenwand bzw. an den Sitzschienen vorzusehen.

## Patentansprüche

1. Sicherheitsgurtsystem (8) für Kraftfahrzeuge mit einem Gurtband, an dem örtlich ein Energieabsorptionsglied (17) vorgesehen ist, das durch einen wenigstens einfach zusammengefalteten und miteinander vernähten Gurtbandabschnitt (18) gebildet wird, wobei sich das Energieabsorptionsglied (17) innerhalb einer Gurtbandabdeckung (18) erstreckt, **dadurch gekennzeichnet,** daß am Gurtband (16) benachbart dem Energieabsorptionsglied (17) eine auf das Gurtband (16) aufgebrachte, durch einen Farbbalken, einen Schriftzug, ein Symbol oder dgl. gebildete Kennzeichnung (22) vorgesehen ist, die bei intaktem Energieabsorptionsglied (17) innerhalb der aus dünnwandigem Kunststoff gefertigten, hüllenartigen Gurtbandabdeckung (19) angeordnet ist, wogegen bereits bei teilweisem Aufreißen der Naht (23) des Energieabsorptionsgliedes (17) die Kennzeichnung (22) außerhalb der Gurtbandabdeckung (19) gelangt und somit für den Sitzinsassen bzw. die Werkstatt sichtbar ist.

2. Sicherheitsgurtsystem nach Anspruch 1, **dadurch gekennzeichnet,** daß die Kennzeichnung (22) bei intaktem Energieabsorptionsglied (17) benachbart der oberen Öffnung (21) der Gurtbandabdeckung (19) verläuft.

## Claims

1. A safety belt system (8) for motor vehicles, comprising a belt strap on which an energy-absorption part (17) is locally provided, the said energy-absorption part (17) being formed by a belt strap portion (18) folded at least once and sewn together, wherein the energy-absorption part (17) extends inside a belt strap cover (19), characterised in that a marking (22) is provided which is applied to the belt strap (16) and formed by a coloured bar, writing, a symbol or the like and which, when the energy-absorption part (17) is intact, is arranged inside the sleeve-type belt strap cover (19) manufactured from thin-section plastics, but when the seam (23) of the energy-absorption part (17) is even partly ripped, the marking (22) passes outside the belt strap cover (19) and is consequently visible to the seat occupant or the workshop.

2. A safety belt system according to claim 1, characterised in that the marking (22) extends adjacent to the upper opening (21) of the belt strap cover (19) when the energy-absorption part (17) is intact.

## Revendications

1. Système de ceinture de sécurité (8) pour véhicules automobiles, comportant une bande de ceinture, sur laquelle localement est prévu un organe d'absorption d'énergie (17) constitué par un tronçon de bande de ceinture (18), replié au moins simplement et assemblé par couture, l'organe d'absorption d'énergie (17) s'étendant à l'intérieur d'un recouvrement de bande de ceinture (18), caractérisé en ce que, sur la bande de ceinture (16), au voisinage de l'organe d'absorption d'énergie (17), est prévue une caractéristique (22) appliquée sur la bande de ceinture (16) constituée par un trait de couleur, un tracé d'écriture, un symbole ou analogue ; cette caractéristique étant disposée, lorsque l'organe d'absorption d'énergie (17) est intact, à l'intérieur du recouvrement de bande de ceinture (19) fabriqué en matière synthétique de faible épaisseur et se présentant sous la forme d'une gaine, alors que, par contre, déjà lorsque la couture (23) de l'organe d'absorption d'énergie (17) est partiellement déchirée, la caractéristique (22) passe à l'extérieur du recouvrement de bande de ceinture (19) et est ainsi visible pour le passager assis, respectivement pour l'atelier.

2. Système de ceinture de sécurité selon la revendication 1, caractérisé en ce que la caractéristique (22) s'étend au voisinage de l'ouverture supérieure (21) du recouvrement de bande de ceinture (19) lorsque l'organe d'absorption d'énergie (17) est intact.
